# EUROPEAN PATENT APPLICATION

(11) **EP 4 333 190 A2**
(43) Date of publication of application: **06.03.2024**
(21) Application number: 22215406.4
(22) Date of filing: 21.12.2022
(51) Int. Cl.: H01M 50/528, H01M 50/536, H01M 50/566

(54) **BATTERY AND MANUFACTURING METHOD FOR BATTERY**

(30) Priority: 13.07.2022 CN 202210828494
(71) Applicant: CALB Co., Ltd., Changzhou City, Jiangsu Province (CN)
(72) Inventor: ZENG, Tianxing, Changzhou City, Jiangsu Province (CN); LI, Guoxiang, Changzhou City, Jiangsu Province (CN)
(74) Representative: Becker, Eberhard

(57) **Abstract**

The disclosure provides a battery and a battery manufacturing method. The battery includes a cell (10), and the cell (10) includes a cell body (11) and a tab (12). The tab (12) extends from the cell body, and the tab (12) includes a first solder mark (121) and a second solder mark (122). The second solder mark (122) covers the first solder mark (121), and the second solder mark (122) is formed with a circumferentially closed space (123) to expose the first solder mark (121). That is, when welding the tab (12) and the cover plate assembly, the tab (12) is welded twice, and a hollow second solder mark (122) is formed.

## Description

### BACKGROUND

### Technical Field

The present disclosure relates to the technical field of batteries, and in particular, to a battery and a manufacturing method for battery.

### Description of Related Art

In the related art, a cover plate assembly is connected with a tab of a cell, and the connection between the tab and the cover plate assembly is directly realized by welding. Due to the limitation of the structure of the tab itself, the tab might be damaged during welding, or the welding quality might be poor, and the reliability of connection will be affected accordingly.

### SUMMARY

The present disclosure provides a battery and a manufacturing method for battery.

According to a first aspect of the present disclosure, a battery is provided, including a cell, and the cell includes a cell body and a tab. The tab extends from the cell body, and the tab includes a first solder mark and a second solder mark. The second solder mark covers the first solder mark, and the second solder mark is formed with a circumferentially closed space to expose the first solder mark.

According to a second aspect of the present disclosure, a manufacturing method for battery is provided, including:

Pre-welding a plurality of single-piece tabs on the cell body to form a first solder mark on the tabs;

Welding the terminal assembly and the tab of the cover plate assembly to form a second solder mark on the tab, so that the second solder mark covers the first solder mark, and the second solder mark is formed with a circumferentially closed space to expose the first solder mark; or,

Welding the adapter of the cover plate assembly and the tab to form a second solder mark on the tab, so that the second solder mark covers the first solder mark, and the second solder mark is formed with a circumferentially closed space to expose the first solder mark.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a tab of a battery according to an exemplary embodiment.
FIG. 2 is a schematic view of a partial structure of a battery according to an exemplary embodiment.
FIG. 3 is a schematic view of a partial structure of a battery according to an exemplary embodiment.
FIG. 4 is a schematic view of a partial structure of a battery according to another exemplary embodiment.
FIG. 5 is a schematic view of a partial structure of a battery set according to an exemplary embodiment.
FIG. 6 is a schematic flowchart of a manufacturing method for a battery according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

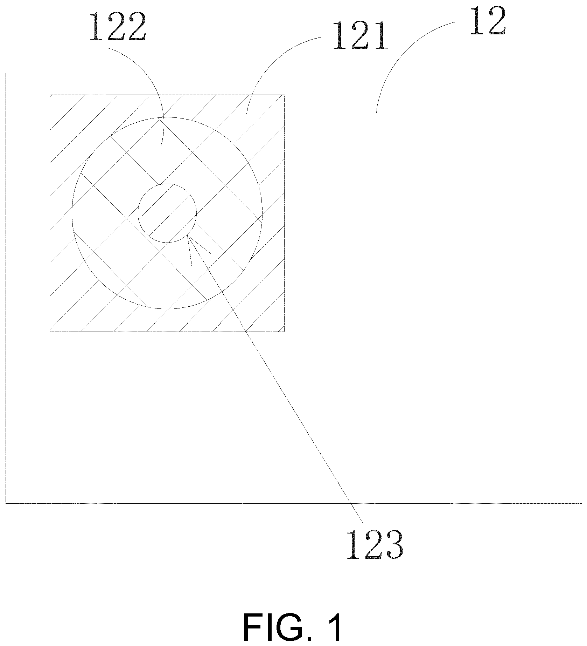

An embodiment of the present disclosure provides a battery, please refer to FIG. 1 to FIG. 4, the battery includes a cell 10, and the cell 10 includes a cell body 11 and a tab 12. The tab 12 extends from the cell body 11, and the tab 12 includes a first solder mark 121 and a second solder mark 122, the second solder mark 122 covers the first solder mark 121, and the second solder mark 122 is formed with a circumferentially closed space 123 to expose the first solder mark 121.

A battery according to an embodiment of the present disclosure includes a cell 10, and the cell 10 includes a cell body 11 and a tab 12 extending from the cell body 11. The tab 12 is formed with the first solder mark 121 and the second solder mark 122, the second solder mark 122 covers the first solder mark 122, and the second solder mark 122 is formed with a circumferentially closed space 123 to expose a part of the first solder mark 121, that is, when welding the tab 12 and the cover plate assembly, the tab 12 is welded twice, and the hollow second solder mark 122 is formed. In this way, welding energy may be better controlled to better achieve heat dissipation, so that the heat generated by welding is not concentrated, and the heat distribution is more uniform, thereby improving the welding quality, and the use performance of the battery may be improved as well.

It should be noted that the second solder mark 122 covers the first solder mark 121, that is, after the first solder mark 121 is formed by the first welding, during the second welding, welding is still performed in the range of the first solder mark 121, so that a second solder mark 122 is formed on the first solder mark 121. Moreover, because the second solder mark 122 is formed with a circumferentially closed space 123, that is, the second solder mark 122 is a hollow solder mark, so that heat dissipation can may better achieved, so that the heat generated by welding is not concentrated, and the heat distribution is more uniform, so as to improve welding quality, and the welded appearance is improved. The second solder mark 122 covers the first solder mark 121, which means that the orthographic projection of the second solder mark 122 is located in the first solder mark 121, and the space 123 may expose the first solder mark 121. Of course, the circumferential outer side of the second solder mark 122 may also expose the first solder mark 121. In some embodiments, it is not excluded that the circumferential outer side of the second solder mark 122 does not expose the first solder mark 121.

The second solder mark 122 is a hollow solder mark, and the space 123 of the hollow solder mark may be used as a heat dissipation space, and the melting width of the hollow solder mark is less than that of the solid solder mark, which allows for uniform temperature distribution. In this way, it is not easy to cause fractures and uneven surface of the solder mark, so as to obtain a high-quality solder mark through the hollow solder mark.

In an embodiment, the space 123 is a circle, that is, the middle part of the second solder mark 122 is enclosed as a circle, which not only facilitates the solder head to form the welding track of the second solder mark 122, but also ensures the welding quality of the tab 12 and the cover plate assembly, and ensures the area of the first solder mark 121 covered by the second solder mark 122, thereby ensuring the welding stability of the tab 12 and the cover plate assembly.

In an embodiment, the second solder mark 122 is a circular ring, thereby forming a circular space 123. During the forming process, the circular second solder mark 122 is formed more easily with the rounded transition at the corner. In addition, the welding track of the second solder mark 122 formed by welding is relatively simple, so that the welding efficiency may be improved on the basis of improving the welding stability of the tab 12 and the cover plate assembly.

In an embodiment, the area of the space 123 occupies 5% to 30% of the sum of the area of the second solder mark 122 and the area of the space 123. On the basis of ensuring that the space 123 of the hollow solder mark can be used as a heat dissipation space, it may also be ensured that the second solder mark 122 has a sufficient area to ensure the reliability of welding.

When the area of the space 123 occupies less than 5% of the sum of the area of the second solder mark 122 and the area of the space 123, it might make heat dissipation difficult, and the problem of heat concentration might occur. When the area of the space 123 occupies more than 30% of the sum of the area of the second solder mark 122 and the area of the space 123, the area of the second solder mark 122 is not large enough, which will cause the problem of poor connection stability, and the stability of the battery will be affected. Moreover, insufficient welding area will lead to poor overcurrent capability of the overcurrent battery, which affects battery performance.

The area of the space 123 may be a, the area of the second solder mark 122 may be b, and al(a+b) may be 5%, 6%, 7%, 8%, 10%, 12%, 15%, 16%, 20%, 22%, 23%, 25%, 26%, 27%, 29% or 30%, etc.

In an embodiment, the area of the second solder mark 122 is 10mm² to 200mm², so as to ensure that the area of the second solder mark 122 is relatively reasonable, and on the basis of ensuring the stability of the connection, the second solder mark 122 will not occupy an excessively large area and affect welding efficiency.

The area of the second solder mark 122 may be 10mm², 11mm², 15mm², 20mm², 30mm², 40mm², 50mm², 55mm², 60mm², 70mm², 75mm², 80mm², 90mm², 100mm², 120mm², 150mm², 155mm², 165mm², 170mm², 175mm², 180mm², 185mm², 190mm², 195mm², 199mm² or 200mm² and so on.

In an embodiment, the melting width of the second solder mark 122 is 1.5mm to 6mm, so as to ensure that the second solder mark 122 may be reliably connected to the tab 12, and may prevent the second solder mark 122 from being excessively wide.

The second solder mark 122 may be a ring, and the melting width of the second solder mark 122 is the ring diameter of the ring, and the melting width of the second solder mark 122 may be 1.5mm, 1.6mm, 1.7mm, 2mm, 2.5mm, 2.8mm, 3mm, 3.5mm, 4mm, 4.5mm, 5mm, 5.5mm, 5.8mm, 5.9mm or 6mm and so on.

It should be noted that the melting width of the second solder mark 122 may be considered as the melting width of the tab 12 when the second solder mark 122 is formed. Further, as shown in FIG. 1, the second solder mark 122 is a ring, and the melting width of the second solder mark 122 is the ring diameter of the ring, that is, the difference between the outer diameter of the ring and the inner diameter of the ring.

In an embodiment, the first solder mark 121 is rectangular, which not only has a simple structure and is easy to form, but also can ensure that the tab 12 may have reliable connection quality.

In an embodiment, the first solder mark 121 is a square, and the size of the first solder mark 121 is 5mm×5mm to 20mm×20mm. On the basis of facilitating welding and forming, the setting of size may avoid that the size of the first solder mark 121 is excessively large to cause damage to the tab 12, which might making it difficult to increase the welding efficiency. Furthermore, it is possible to avoid that the size of the first solder mark 121 is too small to ensure the connection stability of the tab 12.

The size of the first solder mark 121 is 5mm×5mm to 20mm×20mm, that is, the size of the first solder mark 121 in the length direction is equal to the size thereof in the width direction, and the size of the first solder mark 121 can be 5mm×5mm, 6mm×6mm, 7mm×7mm, 10mm× 10mm, 15mm×15mm, 16mm×16mm, 17mm×17mm, 19mm×19mm or 20mm×20mm and so on.

In an embodiment, the second solder marks 122 are all located within the first solder marks 121, that is, damage to the tabs 12 may be controlled to a minimum level. It should be noted that the second solder marks 122 are all located within the first solder marks 121, that is, after the first solder marks 121 are formed, a second welding needs to be performed, and it is necessary to ensure that the welding region aligned with the second welding is located within the first solder mark 121. Herein, it is mainly intended to embody the welding region of the tab 12, and the welding region of the cover plate assembly is not taken into account, that is, the tab 12 is used as a reference for welding, and the second solder mark 122 may be formed when the tab 12 and the cover plate assembly are welded.

In an embodiment, the second solder mark 122 is located in the middle of the first solder mark 121, so as to ensure that the tab 12 will not be damaged during the second welding, and the welding stability of the tab 12 and the cover plate assembly may be ensured.

It should be noted that the middle part does not specifically refer to the center position, but is relative to the circumferential outer edge of the first solder mark 121, that is, the second solder mark 122 does not intersect with the circumferential outer edge of the first solder mark 121, then the second solder mark 122 is located in the middle of the first solder mark 121.

In an embodiment, the second solder mark 122 is located at the center of the first solder mark 121.

In an embodiment, the first solder mark 121 may be a polygon, such as a rectangle. The first solder mark 121 may also be a circular, oval, or irregular shape.

In an embodiment, the first solder mark 121 occupies at least part of the tab 12, and the first solder mark 121 is formed by pre-welding the tab 12, that is, before the tab 12 is connected to the cover plate assembly, the tab 12 is pre-processed through welding, so that the plurality of single-piece tabs forming the tab 12 are reliably connected.

In an embodiment, the tab 12 includes a plurality of single-piece tabs, the first solder mark 121 is formed by pre-welding the tab 12 to combine the plurality of single-piece tabs, and the first solder mark 121 may be formed by directly pre-welding the tab 12. That is, before the tab 12 and the cover plate assembly are welded, the tab 12 is pre-welded, so that two or more single-piece tabs of the tab 12 are combined together, which to a certain extent improves the structural strength of the tab 12. That is, all the single-piece tabs in the tab 12 are combined together, and the tab 12 has a high strength. In this manner, when the tab 12 and the cover plate assembly are welded, even though the energy of welding is relatively large, due to the existence of the first solder mark 121 and the second solder mark 122 being performed on the basis of the first solder mark 121, the first solder mark 121 enhances the strength of the tab 12. Accordingly, during the secondary welding, the probability of causing damage to the tab 12 is considerably reduced. Further considering that the second solder mark 122 is a hollow solder mark, although the energy concentration during the welding process is high, the existence of the first solder mark 121 will also significantly reduce the possibility of damaging the tab 12.

The single-piece tab may be a metal piece, the metal piece may be a metal sheet, and the metal sheet may be a part of a current collector, or there may be other options, which are not specifically limited here.

In an embodiment, the tab 12 includes a plurality of single-piece tabs, and the number of the plurality of single-piece tabs is 100 to 200, that is, the tab 12 may be composed of a relatively large number of single-piece tabs, in order to improve the energy density of the battery. The cell 10 will be made thick, and therefore the layers of single-piece tab will increase. In order to increase the welding strength of a large number of single-piece tabs and cover plate assembly, higher welding energy is normally required. However, if the heat is too concentrated, the welding quality will be affected. Therefore, by forming the first solder mark 121 and the second solder mark 122 on the tab 12, the welding reliability of the tab 12 may be ensured, and the welding quality may be improved.

The number of single-piece tabs that tab 12 may include is 100, 101, 110, 115, 120, 125, 130, 140, 145, 150, 155, 160, 170, 180, 185, 190, 195, 199, or 200 and more.

In an embodiment, the first solder mark 121 and the second solder mark 122 are formed in sequence, that is, during the process of forming the second solder mark 122, since the process is performed in the first solder mark 121, even if the welding energy is relatively large, since the first solder mark 122 enhances the strength of the tab 12, damage to the tab 12 may be avoided.

In an embodiment, the first solder mark 121 and the second solder mark 122 are both laser solder marks; or, the first solder mark 121 and the second solder mark 122 are ultrasonic solder marks.

In an embodiment, the first solder mark 121 and the second solder mark 122 are formed by different welding methods. The tab includes a single-piece tab, the single-piece tab may be a metal sheet, and the metal sheet is thinner. The metal sheets are pre-welded first by a first welding method, that is, a stable connection is formed between the adjacent metal sheets, so that the strength of the tab 12 is enhanced, and the damage of the tab 12 is avoided. Then, the tab 12 and the cover plate assembly are welded by a second welding method, which enhances the connection strength of the tab 12 and the cover plate assembly, and avoids damage to the tab 12 simultaneously. Different welding methods might mean different types of welding energy, or the same type of welding energy with different strengths.

The first solder mark 121 is an ultrasonic solder mark, and the second solder mark 122 is a laser solder mark; or, the first solder mark 121 is a laser solder mark, and the second solder mark 122 is an ultrasonic solder mark.

Specifically, the first solder mark 121 is formed by the first welding, and the second solder mark 122 is formed by the second welding. Any one of ultrasonic welding and laser welding may be used for the first welding method. Correspondingly, any one of ultrasonic welding and laser welding may be adopted for the second welding method, as long as the stability of the connection may be ensured, and the tab 12 will not be damaged during the first welding.

In an embodiment, the first solder mark 121 is an ultrasonic solder mark, and the second solder mark 122 is a laser solder mark. The first welding forms the first solder mark 121, and the second welding forms the second solder mark 122. The first welding method adopts ultrasonic welding, and the plurality of metal sheets of the tab 12 are combined into a whole by the action of ultrasonic waves. It may be considered that a plurality of metal sheets are formed as a whole to form a thick metal plate, which enhances the strength of the tab 12 and avoids damage to the tab 12. Correspondingly, laser welding is adopted for the second welding method, and the second solder mark 122 is formed on the first solder mark 121. The cover plate assembly and the metal plate formed through the first welding are welded. Through the action of laser, the metal plate formed through the first welding and cover plate assembly are fixedly connected together, which enhances the strength of the connection. Moreover, because the second solder mark 122 is formed with a space 123, the energy of the laser may be more concentrated, thereby improving the welding quality of the metal plate and the cover plate assembly.

In an embodiment, there may be at least two first solder marks 121, and adjacent first solder marks 121 are arranged at intervals. That is, during pre-welding, at least two first solder marks 121 are formed by separate welding. The number of the second solder marks 122 may be one or at least two. The second solder marks 122 may be in one-to-one correspondence with the first solder marks 121, and the number of the second solder marks 122 may also be less than the first solder marks 121, that is, part of the first solder marks 121 are not covered by the second solder marks 122.

In an embodiment, the battery further includes a cover plate assembly, and the second solder mark 122 is formed by welding the tab 12 and the cover plate assembly, so as to connect the tab 12 and the cover plate assembly. In this way, the cover plate assembly serves as an electrode leading end of the cell 10, and a hollow second solder mark 122 may improve the connection quality of the tab 12 and the cover plate assembly.

The cover plate assembly may include a cover plate 20 and a terminal assembly 30. The terminal assembly 30 is disposed on the cover plate 20, and the tab 12 may be electrically connected to the terminal assembly 30. Alternatively, the cover plate assembly may include the cover plate 20 and the tab 12 may be electrically connected to the cover plate 20.

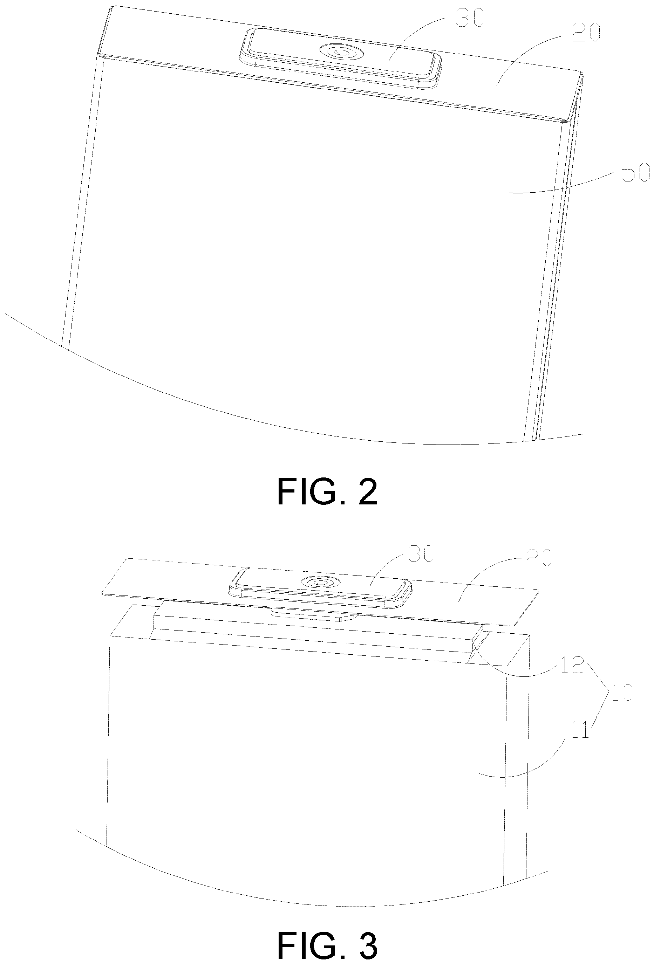

In an embodiment, as shown in FIG. 2 and FIG. 3, the cover plate assembly includes a cover plate 20 and a terminal assembly 30. The terminal assembly 30 is disposed on the cover plate 20, and the second solder mark 122 is formed by welding the tab 12 and the terminal assembly 30 to connect the tab 12 and the terminal assembly 30. Due to the existence of the first solder mark 121, the second solder mark 122 formed subsequently can not only avoid damage to the tab 12, but also ensure the connection stability of the tab 12 and the terminal assembly 30, thereby improving the welding quality of the tab 12 and the terminal assembly 30.

The terminal assembly 30 may be directly welded with the tab 12, thus omitting the need for an adapter in the related art, reducing material cost and simplifying the process.

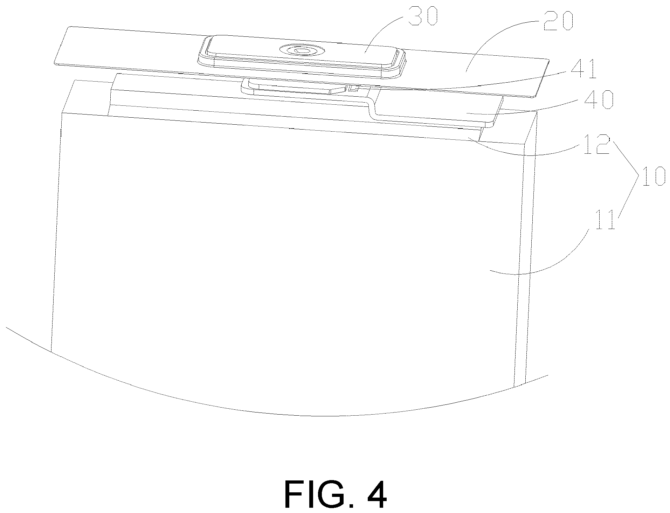

In an embodiment, as shown in FIG. 2 and FIG. 4, the cover plate assembly includes a cover plate 20, a terminal assembly 30 and an adapter 40. The terminal assembly 30 is disposed on the cover plate 20, and the adapter 40 and the terminal assembly 30 are connected. The second solder mark 122 is formed by welding the tab 12 and the adapter 40 to connect the tab 12 and the adapter 40. The tab 12 is electrically connected to the terminal assembly 30 through the adapter 40. Such configuration not only facilitates the positional arrangement of the terminal assembly 30, but also facilitates the adapter 40 to connect the tab 12 and the terminal assembly 30.

The first part of the adapter 40 is connected to the terminal assembly 30, and the second part of the adapter 40 is connected to the tab 12. Under the circumstances, the first part and the second part may not overlap with each other. Therefore, the first part of the adapter 40 and the terminal assembly 30 may be welded or riveted, and the second part of the adapter 40 is welded to the tab 12 to form the second solder mark 122. The adapter 40 may be welded to the terminal assembly 30 and the tab 12 simultaneously, that is, the second solder mark 122 may be formed when the adapter 40 is welded to the terminal assembly 30 and the tab 12 simultaneously.

In an embodiment, as shown in FIG. 4, the adapter 40 includes a fuse portion 41, so that after the current reaches a certain value, the adapter 40 may be disconnected at the position of the fuse portion 41, so that the electrical connection between the tab 12 and the adapter 40 is disconnected. The fuse portion 41 may be a through hole.

The adapter 40 includes the fuse portion 41, therefore, the space for the adapter 40 to connect the tab 12 and the terminal assembly 30 becomes smaller, and the welding area of the adapter 40 and the tab 12 determines overcurrent capability of the battery. In this embodiment, by forming the first solder mark 121 and the second solder mark 122 in sequence, and the second solder mark 122 is formed on the first solder mark 121, the hollow second solder mark 122 may better control the welding energy. Moreover, it is possible to better achieve heat dissipation, so that the heat generated by welding is not concentrated, and the heat distribution is more uniform. In this manner, it may be ensured that the adapter 40 and the tab 12 may have a reliable welding area, so as to form a stable connection in a limited space, thereby ensuring the overcurrent capability of the battery.

The battery includes a cell 10 and an electrolyte, the minimum unit capable of performing electrochemical reactions such as charging/discharging. The cell 10 refers to a unit formed by winding or laminating a stack portion including a first electrode, a separator and a second electrode. When the first electrode is a positive electrode, the second electrode is a negative electrode, and the polarities of the first electrode and the second electrode are interchangeable. The battery further includes a housing member 50, and the cover plate assembly is connected to the housing member 50, so as to realize reliable sealing of the cell 10. There may be two cover plate assemblies, the two cover plate assemblies are respectively disposed on opposite ends of the housing member 50, and the two terminal assemblies 30 may be disposed on the two cover plates 20 respectively. In some embodiments, there may be one cover plate assembly, the cover plate assembly is disposed on the housing member 50, and the two terminal assemblies 30 may be disposed on one cover plate 20 simultaneously.

The cell 10 includes two tabs 12, the two tabs are a positive tab and a negative tab, and any one of the positive tab and the negative tab may be formed with the first solder mark 121 and the second solder mark 122. The positive electrode tab and the negative electrode tab may be connected through the corresponding adapter 40 and the terminal assembly 30, and the adapter 40 connected with the positive electrode tab or the negative electrode tab may include a fuse portion 41.

The cell 10 may be a laminated cell, which is not only convenient to form a group, but also may be processed to obtain a battery with a longer length. The cell 10 has a first electrode sheet, a second electrode sheet that is electrically opposite to the first electrode sheet, and a diaphragm formed between the first electrode sheet and the second electrode sheet, which are laminated on one another. As such, multiple pairs of the first electrode sheet and the second electrode sheet are stacked to form a laminated cell.

The cell 10 may also be a wound cell, that is, the first electrode sheet, the second electrode sheet that is electrically opposite to the first electrode sheet, and the diaphragm disposed between the first electrode sheet and the second electrode sheet are wound to obtain the would cell.

In an embodiment, the fracture rate of the cross-section of the overlapping region of the first solder mark 121 and the second solder mark 122 of the tab 12 is not greater than 30%, so as to ensure that a plurality of single-piece tabs of the tab 12 may form reliable contact, thereby ensuring the overcurrent capability of the tab 12 and the welding stability of the tab 12 and the cover plate assembly, as well as improving the overcurrent capability of the battery. The second solder mark 122 is a hollow solder mark, the space 123 of the second solder mark 122 may be used as a heat dissipation space. Although the heat of the hollow solder mark is relatively concentrated, the space 123 may be used as a heat dissipation space, and the first solder mark 121 improves the strength of the tab 12. Therefore, the heating of the hollow solder mark is more uniform, so that the fracture phenomenon of the hollow solder mark is reduced, thereby improving the connection capability of the tab 12.

It should be noted that the tab 12 may include m single-piece tabs. By performing metallographic testing on the cross-section of the overlapping region of the first solder mark 121 and the second solder mark 122, and observing a cross-section, it may be calculated that the number of unconnected adjacent single-piece tabs is n. That is, the number of single-piece tabs that are not connected to the first solder mark 121 and the second solder mark 122 is n, and the fracture rate of the cross-section of the overlapping region of the first solder mark 121 and the second solder mark 122 of the tab 12 is n/m. Alternatively, the tab 12 may include m single-piece tabs. By performing metallographic testing on the cross-section of the overlapping region of the first solder mark 121 and the second solder mark 122, and observing the two cross-sections under the circumstances, it may be calculated that one cross-section has n1 unconnected adjacent single-piece tabs, and the other cross-section has n2 unconnected adjacent single-piece tabs. The fracture rate of the cross-section of the overlapping region of the first solder mark 121 and the second solder mark 122 is (n1+n2)/2m. Specifically, the tab 12 that forms the first solder mark 121 and the second solder mark 122 is cut, and only the sample formed in the welding region is retained. The sample is put into the mold, a high-definition crystal adhesive may be used for mixing; the mixing ratio is 40:1:1, and the mixture is poured into the mold; the sample is taken out after curing. The sample is cut with a cutting machine, that is, at least the cross-section of the overlapping region of the first solder mark 121 and the second solder mark 122 is exposed. For example, one sample is cut from the middle, thereby forming two samples that may be used for observation, that is, two cross-sections may be observed. The sample may be polished, the sample may be subsequently corroded, the fracture may be observed with a microscope, and the number of fractures may be recorded.

An embodiment of the present disclosure further provides a battery set, including the above-mentioned battery.

A battery set according to an embodiment of the present disclosure includes a battery, the battery includes a cell 10, and the cell 10 includes a cell body 11 and a tab 12 extending from the cell body 11. A first solder mark 121 and a second solder mark 122 are formed on the tab 12, and the second solder mark 122 covers the first solder mark 121. The second solder mark 122 is formed with a circumferentially closed space 123 to expose a part of the first solder mark 121, that is, when welding the tab 12 and the cover plate assembly, the tab 12 is welded twice, and a hollow second solder mark 122 is formed to better control the welding energy and achieve better heat dissipation. In this manner, the heat generated by welding is not concentrated and the heat distribution is more uniform, thereby improving the welding quality and thus improving the use performance of the battery set.

Adjacent batteries may be connected by busbars.

In an embodiment, the battery set is a battery module or a battery pack.

The battery module includes a plurality of batteries, and the battery module may further include an end plate and a lateral plate, and the end plate and the lateral plate are used for fixing the plurality of batteries. The battery may be a quadrangular prism battery, that is, the battery may be a square battery.

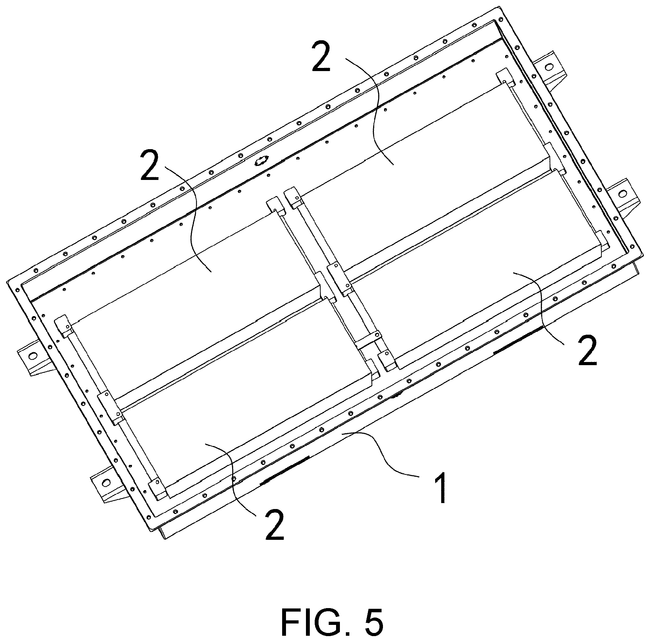

It should be noted that, as shown in FIG. 5, a plurality of batteries may be formed into a battery module 2 and then disposed in the battery box 1, and the plurality of batteries may be fixed through end plates and lateral plates. Multiple batteries may be directly arranged in the battery box, that is, there is no need to group multiple batteries, and in this case, the end plate and the lateral plate may be removed.

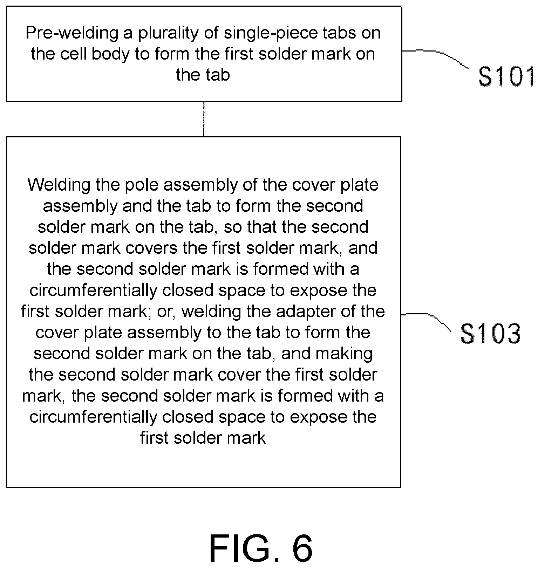

An embodiment of the present disclosure further provides a manufacturing method for battery, please refer to FIG. 6, the manufacturing method for battery includes:

S101, pre-welding a plurality of single-piece tabs on the cell body 11 to form the first solder mark 121 on the tab 12;

S103, welding the terminal assembly 30 of the cover plate assembly and the tab 12 to form the second solder mark 122 on the tab 12, so that the second solder mark 122 covers the first solder mark 121, and the second solder mark 122 is formed with a circumferentially closed space 123 to expose the first solder mark 121; or,

Welding the adapter 40 of the cover plate assembly to the tab 12 to form the second solder mark 122 on the tab 12, and making the second solder mark 122 cover the first solder mark 121, the second solder mark 122 is formed with a circumferentially closed space 123 to expose the first solder mark 121.

In the manufacturing method for battery according to an embodiment of the present disclosure, the first solder mark 121 is formed by pre-welding the tab 12, and the cover plate assembly and the tab 12 are welded on the first solder mark 121 to form the second solder mark 122, that is, the tab 12 is welded twice. Moreover, the second solder mark 122 is formed with a circumferentially closed space 123 to expose a part of the first solder mark 121, that is, a hollow second solder mark 122 is formed. In this way, it is possible to better control the welding energy, and better achieve heat dissipation, so that the heat generated by welding is not concentrated, the heat distribution is more uniform, so as to improve the welding quality.

In an embodiment, the first solder mark 121 may be formed by directly pre-welding the tab 12. That is, the tab 12 is pre-welded before welding the tab 12 and the cover plate assembly, so that all the single-piece tabs of the tab 12 are combined together, which also improves the structural strength of the tab 12 to a certain extent. Accordingly, when the tab 12 and the cover plate assembly are welded, even though the energy of welding is relatively large, due to the existence of the first solder mark 121 and the second solder mark 122 being performed on the basis of the first solder mark 121, the first solder mark 121 enhances the strength of the tab 12. Accordingly, during the secondary welding, the probability of causing damage to the tab 12 is considerably reduced. Moreover, the second solder mark 122 is a hollow solder mark, the space 123 of the hollow solder mark may be used as a heat dissipation space, and the melting width is less than that of the solid solder mark, which facilitates to unify temperature distribution, so that it is not easy to cause fractures and uneven surface of the solder mark, so as to obtain a high-quality solder mark through the hollow solder mark.

In an embodiment, the first solder mark 121 may be formed by pre-welding the tab 12 and the cover plate assembly. That is, through one-time welding with relatively small welding energy, all the single-piece tabs of the tab 12 are combined together. Certainly, the tab 12 and the cover plate assembly are also connected, and then a secondary welding with relatively large welding energy is performed, so that the tab 12 and the cover plate assembly are stably connected, and the second solder mark 122 is formed on the first solder mark 121.

In an embodiment, the first solder mark 121 is formed by the first welding, and the second solder mark 122 is formed by the second welding. Any one of ultrasonic welding and laser welding may be used for the first welding method. Correspondingly, any one of ultrasonic welding and laser welding may be adopted for the second welding method, as long as the stability of the connection may be ensured, and the tab 12 will not be damaged during the first welding.

In an embodiment, the first solder mark 121 is formed on the tab 12 by ultrasonic welding, and the second solder mark 122 is formed by laser welding the tab 12 and the terminal assembly 30.

In an embodiment, the first solder mark 121 is formed on the tab 12 by ultrasonic welding, and the second solder mark 122 is formed by laser welding the tab 12 and the adapter 40.

In an embodiment, the adapter 40 is formed with the fuse portion 41, therefore, the space for the adapter 40 to connect the tab 12 and the terminal assembly 30 becomes smaller, and the welding area of the adapter 40 and the tab 12 determines overcurrent capability of the battery. In this embodiment, by forming the first solder mark 121 and the second solder mark 122 in sequence, and the second solder mark 122 is formed on the first solder mark 121, the hollow second solder mark 122 may better control the welding energy. Moreover, it is possible to better achieve heat dissipation, so that the heat generated by welding is not concentrated, and the heat distribution is more uniform. In this manner, it may be ensured that the adapter 40 and the tab 12 may have a reliable welding area, so as to form a stable connection in a limited space, thereby ensuring the overcurrent capability of the battery.

In an embodiment, the second solder mark 122 is formed by a welding path of a ringshaped dissimilation spiral, which not only facilitates the formation of the second solder mark 122 in the form of a ring, but also ensures the welding quality and avoids the fracture rate of the tab 12 being higher than 30%.

In an embodiment, the second solder mark 122 is formed by using a sine line welding path or a cosine line welding path, which not only facilitates the formation of the second solder mark 122 in the form of a ring, but also ensures the welding quality and avoids the fracture rate of the tab 12 being higher than 30%.

In an embodiment, the step of forming the second solder mark 122 includes: establishing a welding track; and performing welding along the welding track using a sine line welding path or a cosine line welding path to form the second solder mark 122. That is, when welding is performed through the welding head, a welding track may be established first, and this welding track is the substantial final shape of the second solder mark 122. In this manner, subsequently, when the welding head performs welding along the welding track, the welding track may be filled with a sine line welding path or a cosine line welding path, so as to form the second solder mark 122.

Specifically, a welding track may be established through a control program. The welding track may be regarded as a preset virtual welding path, and the traveling path of the specific welding head is the welding track, but the welding is performed in the form of a sine line or a cosine line. It may be further understood that the welding track is finally formed by splicing multiple sine lines or cosine lines.

In an embodiment, the step of establishing a welding track includes: determining a radius value in a first direction; determining a radius value in a second direction, the first direction is perpendicular to the second direction, that is, it may be regarded as determining the substantial shape of the welding track; determining the starting angle and ending angle of welding, and the starting angle and ending angle are 0° and 360° respectively. Accordingly, the welding track may be a circumferentially closed track, and finally a circumferentially closed second solder mark 122 may be formed.

The radius value of the first direction and the radius value of the second direction substantially determine the shape of the welding track. The radius value of the first direction may be equal to the radius value of the second direction, then the welding track is circular, and finally a circular second solder mark 122 may be formed. The radius value in the first direction may not be equal to the radius value in the second direction, and the welding track is an ellipse.

In an embodiment, the step of using a sine line welding path or a cosine line welding path to perform welding along the welding track includes: determining a pulse width of the sine line or cosine line, so as to control the traveling path of the welding head, so as to control the density of welding; determining the frequency of the sine line or cosine line, so as to control the melting width of the formed second solder mark 122, and ensure that the second solder mark 122 may be reliably connected to the tab 12; controlling the operation of the welding head, that is, the welding head may travel along the welding track in the manner of a sine line or cosine line.

In an embodiment, a manufacturing method for battery is used to form the battery described above. The relevant structures and dimensions of the battery manufacturing method may be referred to the above-mentioned battery, and are not repeated here.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery, comprising a cell (10), wherein the cell (10) comprises a cell body (11) and a tab (12), the tab (12) extends from the cell body (11), and the tab (12) comprises a first solder mark (121) and a second solder mark (122), the second solder mark (122) covers the first solder mark (121), and the second solder mark (122) is formed with a circumferentially closed space (123) to expose the first solder mark (121).

2. The battery according to claim 1, wherein the space (123) is a circle.

3. The battery according to claim 2, wherein the second solder mark (122) is a circular ring.

4. The battery according to any one of claims 1-3, wherein an area of the space (123) occupies 5% to 30% of a sum of an area of the second solder mark (122) and the area of the space (123).

5. The battery according to claim 4, wherein the area of the second solder mark (122) is 10mm² to 200mm².

6. The battery according to any one of claims 1-3, wherein a melting width of the second solder mark (122) is 1.5mm to 6mm.

7. The battery according to any one of claims 1-3, wherein the first solder mark (121) is a square.

8. The battery according to claim 7, wherein a size of the first solder mark (121) is 5mm×5mm to 20mm×20mm.

9. The battery according to any one of claims 1-3, wherein the second solder mark (122) is located in middle of the first solder mark (121).

10. The battery according to any one of claims 1-3, wherein the tab (12) comprises a plurality of single-piece tabs, the first solder mark (121) is formed by pre-welding the tab (12) to combine the plurality of single-piece tabs;
wherein the first solder mark (121) and the second solder mark (122) are formed in sequence, the first solder mark (121) is an ultrasonic solder mark, and the second solder mark (122) is a laser solder mark.

11. The battery according to any one of claims 1-3, wherein the battery further comprises a cover plate assembly, and the second solder mark (122) is formed by welding the tab (12) and the cover plate assembly, so as to connect the tab (12) and the cover plate assembly.

12. The battery according to claim 11, wherein the cover plate assembly comprises a cover plate (20) and a terminal assembly (30), the terminal assembly (30) is disposed on the cover plate (20), and the second solder mark (122) is formed by welding the tab (12) and the terminal assembly (30), so as to connect the tab (12) and the terminal assembly (30).

13. The battery according to claim 11, wherein the cover plate assembly comprises a cover plate (20), a terminal assembly (30) and an adapter (40), the terminal assembly (30) is arranged on the cover plate (20), and the adapter (40) is connected with the terminal assembly (30), and the second solder mark (122) is formed by welding the tab (12) and the adapter (40), so as to connect the tab (12) with the adapter (40).

14. The battery according to claim 13, wherein the adapter (40) comprises a fuse portion (41).

15. The battery according to any one of claims 1-3, wherein a fracture rate of a cross-section of an overlapping region of the first solder mark (121) and the second solder mark (122) of the tab (12) is not greater than 30%.

16. The battery according to any one of claims 1-3, wherein the tab (12) comprises a plurality of single-piece tabs, and the number of the plurality of single-piece tabs is 100 to 200.

17. A manufacturing method for a battery, comprising:
pre-welding a plurality of single-piece tabs on a cell body (11) to form a first solder mark (121) on a tab (12);
welding a terminal assembly (30) of a cover plate assembly and the tab (12) to form a second solder mark (122) on the tab (12), so that the second solder mark (122) covers the first solder mark (121), and the second solder mark (122) is formed with a circumferentially closed space (123) to expose the first solder mark (121); or,
welding an adapter (40) of the cover plate assembly and the tab (12) to form the second solder mark (122) on the tab (12), and making the second solder mark (122) cover the first solder mark (121), wherein the second solder mark (122) is formed with the circumferentially closed space (123) to expose the first solder mark (121).

18. The manufacturing method for the battery according to claim 17, wherein a fuse portion (41) is formed on the adapter (40).

19. The manufacturing method for the battery according to claim 17 or 18, wherein the second solder mark (122) is formed by using a sine line welding path, or the second solder mark (122) is formed by using a cosine line welding path.

20. The manufacturing method for the battery according to claim 19, wherein the step of forming the second solder mark (122) comprises:
establishing a welding track;
performing welding along the welding track using the sine line welding path or the cosine line welding path to form the second solder mark (122).

21. The manufacturing method for the battery according to claim 20, wherein the step of establishing the welding track comprises:
determining a radius value in a first direction;
determining a radius value in a second direction, wherein the first direction is perpendicular to the second direction;
determining a starting angle and an ending angle of welding, wherein the starting angle and the ending angle are 0° and 360° respectively.

22. The manufacturing method for the battery according to claim 21, wherein the radius value of the first direction is equal to the radius value of the second direction.

23. The manufacturing method for the battery according to claim 20, wherein the step of using the sine line welding path or the cosine line welding path to perform welding along the welding track comprises:
determining a pulse width of the sine line or the cosine line;
determining a frequency of the sine line or the cosine line;
controlling an operation of a welding head.
